# FASCICULE DE BREVET EUROPEEN

(11) **EP 2 558 741 B1**
(45) Date de publication et mention de la délivrance du brevet: **11.06.2014**
(21) Numéro de dépôt: 11719337.5
(22) Date de dépôt: 06.04.2011
(51) Int. Cl.: F16D 27/00, F16D 27/118, B60K 6/387

(54) **GROUPE MOTOPROPULSEUR POUR VEHICULE AUTOMOBILE, COMPRENANT UNE MACHINE ELECTRIQUE**
ANTRIEBSSTRANG EINES KRAFTFAHRZEUGES MIT EINER ELEKTROMASCHINE
MOTOR VEHICLE DRIVE TRAIN COMPRISING AN ELECTRIC MACHINE

(30) Priorité: 15.04.2010 FR 1052894
(43) Date de publication de la demande: 20.02.2013
(73) Titulaire: PSA Peugeot Citroen Automobiles S.A., 78140 Velizy Villacoublay (FR)
(72) Inventeur: ROY, Franck, F-91700 Fleury Merogis (FR); ROUSS, Vicky, F-92800 Puteaux (FR)
(74) Mandataire: Rosenberg, Muriel Sylvie
(86) Numéro de dépôt international: PCT/FR2011/050766
(87) Numéro de publication internationale: WO 2011/128557

(56) Documents cités:
- DE-A1- 10 033 482
- DE-A1- 19 837 115
- DE-A1-102007 010 765
- US-A1- 2008 318 721
- US-A1- 2010 000 835

## Description

La présente invention concerne un groupe motopropulseur pour véhicule automobile, comportant une machine électrique entraînant des roues du véhicule, ainsi qu'un véhicule automobile équipé d'un tel groupe motopropulseur.

Un type de véhicule hybride connu comporte un groupe motopropulseur comprenant un moteur thermique, disposé à l'avant et réalisant la motorisation principale du véhicule, et un groupe motopropulseur comprenant une machine électrique, entraînant les roues arrière par deux arbres disposés sensiblement suivant les axes de ces roues.

La chaîne de traction comporte successivement la machine électrique qui entraîne par un réducteur de vitesse, un différentiel transmettant le mouvement en le répartissant vers les deux arbres de roue. La machine électrique est généralement reliée de manière permanente aux roues motrices, pour assurer une traction du véhicule à partir d'une énergie stockée dans des accumulateurs électriques, ou une recharge de ces accumulateurs avec la machine électrique utilisée comme génératrice de courant.

Toutefois sur certains véhicules, comme présenté notamment par le document FR-A1-2931399, le groupe motopropulseur électrique comporte un moyen d'engagement commandé par un actionneur, permettant de dégager deux éléments pour ouvrir la chaîne de traction. On peut ainsi désolidariser la machine électrique des roues motrices pour éviter un entraînement en rotation à vide de cette machine quand elle n'est pas utilisée, et réduire les pertes dues aux frottements internes, et à l'inertie supplémentaire qu'il faut relancer à chaque accélération.

Un type d'actionneur connu permettant d'ouvrir une chaîne de traction, présenté notamment par le document US-B2-7325664, comporte un électroaimant qui attire et fait coulisser axialement un manchon comprenant des dents de crabotage, venant en prise avec d'autres dents liés à un arbre à entraîner, pour fermer une chaîne de traction. Un ressort de rappel presse sur le manchon dans le sens inverse pour décraboter ce manchon lorsque le courant est coupé dans l'électro-aimant, et ouvrir la chaîne de traction.

Encore un groupe motopropulseur est connu de US 2010/0000835 A1.

Un problème qui se pose avec ce type d'actionneur est qu'il faut prévoir un courant de maintien permanent pour conserver une certaine force de l'électro-aimant, permettant de garder le ressort de rappel comprimé afin de maintenir la chaîne de traction fermée.

Le courant de maintien consomme alors en permanence une énergie électrique. De plus il faut dimensionner les composants électriques, notamment l'actionneur ainsi que son électronique de puissance d'alimentation, en fonction de ce courant permanent pour éviter un échauffement, ce qui a un effet sur le poids du véhicule et sur son coût.

La présente invention a notamment pour but d'éviter ces inconvénients de la technique antérieure, et de proposer un groupe motopropulseur électrique pour véhicule automobile, comportant un moyen efficace, économique et sûr permettant une ouverture de la chaîne de traction.

Elle propose à cet effet un groupe motopropulseur selon la revendication 1.

Un avantage du groupe motopropulseur électrique selon l'invention, est que grâce à la cinématique irréversible, il n'est pas nécessaire d'utiliser une énergie électrique pendant les phases de roulage ne comportant pas de changement d'état de la chaîne de traction, pour maintenir une position stable de l'actionneur électrique, ce qui permet d'éviter des consommations d'énergie inutiles.

Le groupe motopropulseur selon l'invention peut en outre comporter une ou plusieurs des caractéristiques suivantes, qui peuvent être combinées entre elles.

Avantageusement, la cinématique irréversible comporte un système vis-écrou.

Avantageusement, la vis est entraînée en rotation par le moteur électrique.

Avantageusement, la vis est constituée par l'arbre du moteur électrique, qui est en prise avec un écrou comportant un moyen de guidage axial empêchant une rotation, cet écrou entraînant à son tour axialement un crabot d'engagement de la chaîne de traction.

Avantageusement, le groupe motopropulseur comporte un ressort disposé axialement entre l'écrou et le crabot, permettant dans le cas où les dents du crabot viennent buter sur les dents complémentaires à engager, de maintenir une rotation de la vis déplaçant l'écrou par rapport au crabot en comprimant ce ressort, pour autoriser un engagement ultérieur du crabot par une détente du ressort.

Selon un mode de réalisation, le moyen d'engagement est disposé dans la chaine de traction, entre un train planétaire de réduction entraîné par la machine électrique, et un différentiel de répartition du mouvement vers les deux roues motrices d'un essieu.

Avantageusement, l'élément de sortie du train planétaire est constitué par le porte-satellites, l'arbre de ce porte-satellites formant un guidage pour un pignon libre relié en permanence au différentiel, et le moyen d'engagement réalisant une liaison entre ce porte-satellites et ce pignon libre.

Le crabot peut comporter des cannelures axiales intérieures qui coulissent sur des cannelures complémentaires de l'arbre du porte-satellites.

L'invention a aussi pour objet un véhicule automobile comportant un groupe motopropulseur électrique comprenant l'une quelconque des caractéristiques précédentes.

En particulier, le véhicule automobile peut disposer d'une motorisation principale du train avant comprenant un moteur thermique, et du groupe motopropulseur électrique qui entraîne les roues arrière, pour permettre une traction hybride de ce véhicule.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est une vue éclatée d'un groupe motopropulseur électrique selon l'invention ; et
- la figure 2 est une vue en coupe axiale de la transmission et de l'actionneur de ce groupe motopropulseur.

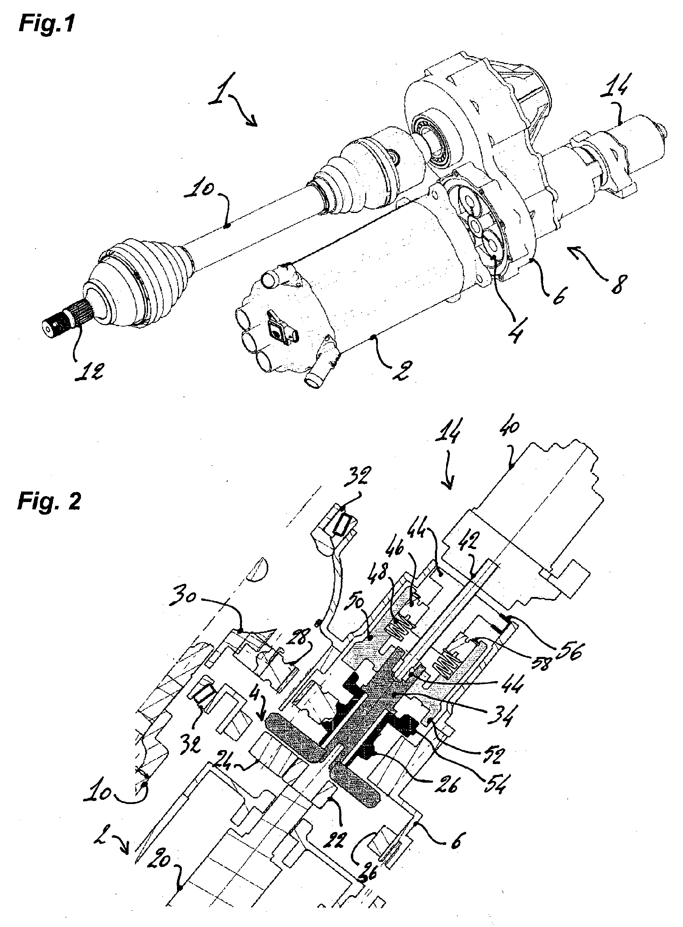

La figure 1 présente un groupe motopropulseur 1 pour un train arrière d'un véhicule hybride, comportant une machine électrique 2 entraînant directement un train planétaire 4 placé axialement en bout, qui est logé dans un carter 6 d'une transmission 8. Le train planétaire 4 entraîne à son tour un différentiel situé sur un axe parallèle et décalé latéralement par rapport à la machine électrique 2, qui entraîne en répartissant le mouvement deux arbres de roue 10 disposés axialement de chaque côté de ce différentiel.

Chaque arbre de roue 10 comporte des cannelures 12 sur son extrémité extérieure, qui sont emboîtées sur des cannelures correspondantes du moyeu d'une roue arrière pour entraîner cette roue. Pour simplifier le dessin, un seul axe de roue 10 est représenté.

Un actionneur 14 situé dans l'axe de la machine électrique 2, et de l'autre côté de la transmission 8 par rapport à cette machine électrique, appelé par la suite par convention côté arrière, permet d'engager ou de dégager un crabot assurant la liaison entre le train planétaire 4 et le différentiel.

On obtient ainsi un groupe motopropulseur 1 disposé sensiblement au milieu du train arrière, comportant la machine électrique 2 qui est rapprochée d'un des arbres de roue 10, pour limiter l'encombrement de ce groupe motopropulseur.

La machine électrique 2 est pilotée par un calculateur non représenté, de gestion du groupe motopropulseur électrique, qui commande cette machine suivant la demande du conducteur et les conditions de roulage, pour délivrer un couple moteur positif ou négatif afin d'optimiser les consommations d'énergie du véhicule.

La figure 2 présente le carter 4 de transmission 8, comportant le différentiel 30 guidé par deux roulements 32.

Le rotor 20 de la machine électrique 2, comportant à son extrémité arrière le pignon solaire 22 du train planétaire 4. Le porte-satellites 34 de ce train planétaire 4, supporte les axes des pignons satellites 24 qui engrènent d'un côté avec le pignon solaire 22, et d'un autre côté avec une couronne externe 36 fixée au carter 6 de la transmission 4. On réalise de cette manière une première réduction du mouvement entre le rotor 20 de la machine électrique 2, et le porte-satellites 34.

L'arbre du porte-satellites 34 tourné vers l'arrière de la transmission, supporte et guide un pignon libre 26, par un roulement à aiguilles permettant à ces deux éléments de tourner librement entre eux.

L'actionneur 14 dispose d'un moteur électrique 40 placé suivant l'axe de la machine électrique 2, du côté arrière de la transmission 8, qui comprend un arbre 42 tourné vers l'avant, formant une vis comportant un filetage avec un pas faible réalisé sur une majeure partie de sa longueur. L'extrémité avant de la vis 42 est insérée dans une douille à aiguilles 44 logée dans un creux axial arrière de l'arbre du porte-satellites 34, pour former un palier avant guidant cette vis.

Un écrou 44 en prise sur la vis 42, comporte un doigt de guidage linéaire 56 qui coulisse dans un guidage axial réalisé dans le carter 4 de la transmission 8, pour empêcher une rotation de cet écrou tout en permettant librement son coulissement axial en fonction de la rotation du moteur électrique 40.

L'écrou 44 supporte un roulement à billes 46 maintenu par sa bague intérieure, la bague extérieure de ce roulement étant elle-même maintenue dans un logement arrière d'un crabot 50 constituant un moyen d'accouplement entre le porte-satellites 34 et le pignon libre 26.

Un ressort 48 est disposé axialement entre le roulement 46 et le crabot 50, il prend appui d'un côté sur le fond du logement arrière de ce crabot, et de l'autre sur la bague extérieure de ce roulement pour exercer un effort axial permanent qui tend à reculer vers l'arrière le roulement. Le roulement 46 qui peut coulisser axialement dans le logement arrière du crabot 50, est arrêté dans une position arrière sous la poussée du ressort 48, par un circlips 58 logé dans une rainure circulaire de ce logement arrière, qui forme une butée arrière du roulement.

Le crabot 50 est guidé du côté avant par des cannelures disposées sur la partie arrière de l'arbre du porte-satellites 34, pour permettre à la fois un coulissement axial de ce crabot sous l'effet d'un déplacement de l'écrou 44 et du roulement à billes 46, et un entraînement en rotation du crabot par le porte-satellites.

Le pignon libre 26 comporte du côté arrière, une collerette comprenant une série de dents de crabotage 54 tournées radialement vers l'extérieur. Le crabot 52 comporte sur face avant un creux cylindrique centré sur l'axe, comprenant sur sa périphérie une série de dents tournées radialement vers l'intérieur, qui peuvent s'ajuster sur les dents extérieures du pignon libre 26 quand ce crabot coulisse vers l'avant.

En position de repos, le crabot 52 est maintenu en position arrière par le moteur électrique 40, ses dents intérieures venant un peu en arrière des dents extérieures du pignon libre 26. Le pignon libre 26 est désolidarisé du porte-satellites 34, la chaîne de traction est ouverte, et permet au véhicule de rouler sans entraîner la machine électrique 2.

Pour refermer la chaîne de traction et établir une liaison entre le véhicule et la machine électrique 2, le calculateur de gestion du groupe motopropulseur électrique 1, commande une rotation du moteur électrique 40 qui en faisant tourner la vis 42 déplace axialement l'écrou 44 vers l'avant. Le roulement 46 est aussi déplacé vers l'avant, entraînant dans ce sens le crabot 50 qui peut ajuster ses dentures intérieures sur les dentures extérieures du pignon libre 26, pour solidariser ces deux éléments ensemble.

Dans le cas où les dents du crabot 50 viennent buter en face de celles du pignon libre 26, empêchant une avance de ce crabot et un emboîtement des dents, le moteur électrique 40 continue sa rotation et l'écrou 44 se déplaçant vers l'avant, le ressort 48 est comprimé. Puis lors d'une petite rotation d'un des deux éléments, générée par exemple par l'avance du véhicule qui entraîne en rotation le pignon libre 26, les dents tournent les unes par rapport aux autres et le ressort 48 peut se détendre rapidement en engageant les dentures, ce qui crabote la transmission.

On réalise ainsi un moyen simple et efficace pour craboter la transmission. De plus le système vis-écrou disposant d'un filetage avec un pas réduit, forme une cinématique irréversible, le mouvement du crabot 50 ne pouvant se produire que par la mise en rotation de la vis 42 commandée par le moteur électrique 40.

Ce principe de cinématique irréversible permet après un actionnement de crabotage ou de décrabotage, de couper complètement l'alimentation en courant du moteur électrique 40 tout en étant assuré de garder la position stable demandée, ce qui assure la sécurité. On obtient ainsi une consommation de courant réduite, et un faible échauffement des composants électriques de commande du moteur électrique 40.

## Revendications

1. Groupe motopropulseur pour véhicule automobile, comprenant une machine électrique (2) reliée à des roues motrices par une transmission de mouvement (8) pour former une chaîne de traction du véhicule, cette transmission comprenant un moyen d'engagement permettant d'ouvrir la chaîne de traction pour désolidariser la machine électrique (2) des roues motrices, **caractérisé en ce que** le moyen d'engagement de la chaîne de traction comporte un actionneur électrique (14) situé dans l'axe de la machine électrique (2), permettant d'engager ou de dégager des moyens (50, 52, 54) formant crabot assurant la liaison entre la machine électrique (4) et les roues motrices du véhicule via la transmission de mouvement (8), le dit actionneur (14) comprenant une cinématique irréversible, permettant de maintenir ce moyen d'engagement dans une position stable en l'absence de courant dans l'actionneur électrique.

2. Groupe motopropulseur suivant la revendication 1, **caractérisé en ce que** la cinématique irréversible comporte un système vis-écrou (42, 44).

3. Groupe motopropulseur suivant la revendication 2, **caractérisé en ce que** la vis (42) est entraînée en rotation par le moteur électrique (40).

4. Groupe motopropulseur suivant la revendication 3, **caractérisé en ce que** la vis (42) est constituée par l'arbre du moteur électrique (40), qui est en prise avec un écrou (44) comportant un moyen de guidage axial (56) empêchant une rotation, cet écrou entraînant à son tour axialement un crabot (50) d'engagement de la chaîne de traction.

5. Groupe motopropulseur suivant la revendication 4, **caractérisé en ce qu'**il comporte un ressort (48) disposé axialement entre l'écrou (44) et le crabot (50), permettant dans le cas où les dents du crabot (50) viennent buter sur les dents complémentaires à engager, de maintenir une rotation de la vis (42) déplaçant l'écrou par rapport au crabot en comprimant ce ressort, pour autoriser un engagement ultérieur du crabot par une détente du ressort.

6. Groupe motopropulseur suivant l'une quelconque des revendications précédentes, **caractérisé en ce que** le moyen d'engagement est disposé dans la chaine de traction, entre un train planétaire de réduction (4) entraîné par la machine électrique (2), et un différentiel (30) de répartition du mouvement vers les deux roues motrices d'un essieu.

7. Groupe motopropulseur suivant la revendication 6, **caractérisé en ce que** l'élément de sortie du train planétaire (4) est constitué par le porte-satellites (34), l'arbre de ce porte-satellites formant un guidage pour un pignon libre (26) relié en permanence au différentiel (30), et le moyen d'engagement réalisant une liaison entre ce porte-satellites et ce pignon libre.

8. Groupe motopropulseur suivant les revendications 5 et 7, **caractérisé en ce que** le crabot (50) comporte des cannelures axiales intérieures qui coulissent sur des cannelures complémentaires de l'arbre du porte-satellites (34).

9. Véhicule automobile comportant un groupe motopropulseur électrique (1), **caractérisé en ce que** ce groupe motopropulseur est réalisé suivant l'une quelconque des revendications précédentes.

10. Véhicule automobile suivant la revendication 9, **caractérisé en ce qu'**il dispose d'une motorisation principale du train avant comprenant un moteur thermique, et du groupe motopropulseur électrique (1) qui entraîne les roues arrière, pour permettre une traction hybride de ce véhicule.

## Patentansprüche

1. Antriebsaggregat für Kraftfahrzeug, das eine Elektromaschine (2) aufweist, die mit Antriebsrädern durch eine Bewegungsübertragung (8) verbunden ist, um einen Antriebsstrang des Fahrzeugs zu bilden, wobei diese Übertragung ein Eingriffsmittel aufweist, das es erlaubt, den Antriebsstrang zu öffnen, um die Elektromaschine (2) von den Antriebsrädern abzutrennen, **dadurch gekennzeichnet, dass** das Eingriffsmittel des Antriebsstrangs einen elektrischen Stellantrieb (14) aufweist, der sich in der Achse der Elektromaschine (2) befindet, der es erlaubt, Mittel (50, 52, 54), die Klauen, die die Verbindung zwischen der Elektromaschine (4) und den Antriebsrädern des Fahrzeugs über die Bewegungsübertragung (8) sicherstellen, bilden, ein- oder auszurücken, wobei der Stellantrieb (14) eine nicht umkehrbare Kinematik aufweist, die es erlaubt, dieses Eingriffsmittel bei Fehlen von Strom in dem elektrischen Stellantrieb in einer beständigen Position zu halten.

2. Antriebsaggregat nach Anspruch 1, **dadurch gekennzeichnet, dass** die nicht umkehrbare Kinematik ein System aus Schraube und Mutter (42, 44) aufweist.

3. Antriebsaggregat nach Anspruch 2, **dadurch gekennzeichnet, dass** die Schraube (42) in Drehung von dem Elektromotor (40) angetrieben ist.

4. Antriebsaggregat nach Anspruch 3, **dadurch gekennzeichnet, dass** die Schraube (42) aus der Welle des Elektromotors (40) besteht, die in eine Mutter (44) eingreift, die ein axiales Führungsmittel (56) aufweist, das eine Drehung verhindert, wobei die Mutter ihrerseits axial eine Klaue (50) zum Eingreifen in den Antriebsstrang aufweist.

5. Antriebsaggregat nach Anspruch 4, **dadurch gekennzeichnet, dass** es eine Feder (48) aufweist, die axial zwischen der Mutter (44) und der Klaue (50) angeordnet ist, die es in dem Fall, in dem die Zähne der Klaue (50) auf den komplementären Zähnen, in die eingegriffen werden soll, anschlagen, eine Drehung der Schraube (42) aufrecht zu erhalten, indem die Mutter in Bezug auf die Klaue verlagert wird, indem diese Feder komprimiert wird, um ein späteres Eingreifen der Klaue durch ein Entspannen der Feder zu erlauben.

6. Antriebsaggregat nach einem der vorhergehenden Ansprüche, **dadurch gekennzeichnet, dass** das Eingriffsmittel in dem Antriebsstrang zwischen einem Untersetzungsplanetenradsatz (4), der von der Elektromaschine (2) angetrieben ist, und einem Differenzial (30) zum Verteilen der Bewegung zu den zwei Antriebsrädern einer Achse angeordnet ist.

7. Antriebsaggregat nach Anspruch 6, **dadurch gekennzeichnet, dass** das Ausgangselement des Planetenradsatzes (4) aus dem Planetenradträger (34) besteht, wobei die Welle dieses Planetenradträgers eine Führung für ein freies Ritzel (26) bildet, das ständig mit dem Differenzial (30) verbunden ist, und wobei das Eingriffsmittel eine Verbindung zwischen diesem Planetenradträger und diesem freien Ritzel herstellt.

8. Antriebsaggregat nach den Ansprüchen 5 und 7, **dadurch gekennzeichnet, dass** die Klaue (50) axiale innere Rillen aufweist, die auf komplementären Rillen der Welle des Planetenradträgers (34) gleiten.

9. Kraftfahrzeug, das ein elektrisches Antriebsaggregat (1) aufweist, **dadurch gekennzeichnet, dass** dieses Antriebsaggregat gemäß einem der vorhergehenden Ansprüche hergestellt ist.

10. Kraftfahrzeug nach Anspruch 9, **dadurch gekennzeichnet, dass** es über einen Hauptantrieb der Vorderachse verfügt, der einen Verbrennungsmotor aufweist, und über ein elektrisches Antriebsaggregat (1), das die Hinterräder antreibt, um einen Hybridantrieb dieses Fahrzeugs zu erlauben.

## Claims

1. A motor vehicle drive train comprising an electric machine (2) connected to driven wheels by a movement transmission (8) to form a drive line of the vehicle, this transmission comprising an engagement means allowing the drive line to be opened so as to disconnect the electric machine (2) from the driven wheels, **characterized in that** the means of engaging the drive line comprises an electric actuator (14) situated in the axis of the electric machine (2), allowing the engaging or disengaging of the means (50, 52, 54) forming a dog clutch ensuring the connection between the electric machine (4) and the driven wheels of the vehicle via the movement transmission (8), the said actuator (14) comprising irreversible kinematics, allowing this engagement means to be maintained in a stable position in the absence of current in the electric actuator.

2. The drive train according to Claim 1, **characterized in that** the irreversible kinematics comprises a screw-nut system (42, 44).

3. The drive train according to Claim 2, **characterized in that** the screw (42) is driven in rotation by the electric motor (40).

4. The drive train according to Claim 3, **characterized in that** the screw (42) is constituted by the shaft of the electric motor (40), which is engaged with a nut (44) comprising an axial guiding means (56) preventing a rotation, this nut driving in turn axially a dog clutch (50) for engagement of the drive line.

5. The drive train according to Claim 4, **characterized in that** it comprises a spring (48) disposed axially between the nut (44) and the dog clutch (50) allowing, in the case where the teeth of the dog clutch (50) come to abut on the complementary teeth which are to be engaged, a rotation to be maintained of the screw (42) moving the nut with respect to the dog clutch by compressing this spring, to permit a subsequent engagement of the dog clutch by a relaxing of the spring.

6. The drive train according to any one of the preceding claims, **characterized in that** the engagement means is disposed in the drive line, between a reduction planetary gear train (4) driven by the electric machine (2), and a differential (30) for distribution of the movement towards the two driven wheels of an axle.

7. The drive train according to Claim 6, **characterized in that** the output element of the planetary gear train (4) is constituted by the planet carrier (34), the shaft of this planet carrier forming a guide for a free pinion (26) permanently connected to the differential (30), and the engagement means forming a connection between this planet carrier and this free pinion.

8. The drive train according to Claims 5 and 7, **characterized in that** the dog clutch (50) comprises interior axial grooves which slide on complementary grooves of the shaft of the planet carrier (34).

9. A motor vehicle comprising an electric drive train (1), **characterized in that** this drive train is realized according to any one of the preceding claims.

10. The motor vehicle according to Claim 9, **characterized in that** it has a main engine power of the front axle comprising a heat engine, and the electric drive train (1) which drives the rear wheels, to allow a hybrid traction of this vehicle.
